# EUROPÄISCHE PATENTANMELDUNG

(11) **EP 3 858 527 A1**
(43) Veröffentlichungstag der Anmeldung: **04.08.2021**
(21) Anmeldenummer: 21154236.0
(22) Anmeldetag: 29.01.2021
(51) Int. Cl.: B23D 61/12, B27B 7/00, B27B 15/00, B23D 61/02, B23D 59/00, B27B 31/08, B27G 19/02

(54) **VORRICHTUNG ZUM ABSÄGEN EINER LAMELLE VON EINEM SUBSTRAT**

(30) Priorität: 31.01.2020 AT 5001620 U
(71) Anmelder: Leitinger, Hans-Peter, 8551 Wies (AT)
(72) Erfinder: Leitinger, Hans-Peter, 8551 Wies (AT)
(74) Vertreter: Margotti, Herwig Franz

(57) **Zusammenfassung**

Die Erfindung betrifft eine Vorrichtung (1) zum Absägen einer Lamelle (2) von einem Substrat (3). Die Vorrichtung (1) umfasst ein Sägemittel (4) mit einer im Wesentlichen horizontal angeordneten Schnittebene (5), welches Sägemittel (4) dazu ausgebildet ist, die Lamelle (2) im Bereich der Unterseite (6) des Substrats (3) abzusägen, ein Transportmittel (12), das dazu ausgebildet ist, das Substrat (3) in Längsrichtung dem Sägemittel (4) entlang einer Transportrichtung (9) zuzuführen, und einen Spaltkeil (10), der im Bereich des Schneidespalts (11) dem Sägemittel (4) nachgelagert angeordnet ist, wobei die Lamelle (2) unterhalb des Sägemittels (4) und des Spaltkeils (10) wegführbar ist.

Die Vorrichtung (1) umfasst im Bereich des Spaltkeils (10) einen Sensor (15), welcher Sensor (15) ausgebildet ist, an zumindest einem Messpunkt (16) oder entlang zumindest eines Messbereichs (17) zumindest einen Qualitätsparameter (19) der Lamelle (2) zu ermitteln.

## Beschreibung

Die Erfindung betrifft eine Vorrichtung zum Absägen von mindestens einer Lamelle von einem Substrat gemäß dem Oberbegriff von Anspruch 1.

Die Vorrichtung, die beispielsweise in der Holzindustrie Anwendung findet, umfasst ein Sägemittel, das dazu ausgebildet ist, die Lamelle im Bereich der Unterseite und/oder der Oberseite des Substrats oder von zumindest einer Seitenfläche des Substrats abzusägen und ein Transportmittel, das dazu ausgebildet ist, das Substrat in Längsrichtung dem Sägemittel entlang einer Transportrichtung zuzuführen. Die DE 10 2009 054 342 A1 offenbart eine derartige Vorrichtung zum Aufschneiden eines blockförmigen Substrats in Lamellen.

Das Problem bei den bekannten Vorrichtungen besteht darin, dass produktionsbedingte Abweichungen bei Qualitätsparametern der Lamellen, insbesonders Abweichungen bei den Soll-Dimensionen wie beispielsweise Stärke (Dicke) der Lamellen, erst während der nachgelagerten Sortierung feststellbar sind. Wird dort eine derartige Abweichung festgestellt, kann erst spät darauf reagiert werden und es ist üblicherweise bereits eine große Menge an Verschnitt angefallen. Aufgrund dieses späten Feedbacks ist auch die Einstellung der wichtigsten Sägeparameter, beispielsweise Vorschubgeschwindigkeit des Transportmittels und Sägegeschwindigkeit des Sägemittels, nur schwierig und nichtzufriedenstellend durchführbar.

Aus dem österreichischen Patent AT 396 895 B des Erfinders der vorliegenden Erfindung ist ein Bandsägeblatt mit Zähnen, die gegenüber dem Bandsägeblattkörper eine Schräglage einnehmen, bekannt. Alle Zähne des Bandsägeblattes schließen - im Querschnitt des Bandsägeblattes gesehen - einen Winkel in ausschließlich einer Richtung gegenüber dem an die Zähne im Querschnitt anschließenden Bandsägeblattkörper ein, wobei die Zähne gegen das zu schneidende Substrat schräg zur Mitte des Substrats ausgerichtet sind. Dieses Bandsägeblatt konnte sich jedoch in der Praxis nicht bewähren. Es zeigte sich nämlich im Zuge eines Forschungsprojekts, dass zwar für eine Schnittlänge von einigen Metern ein exaktes, gerades Sägen mit dem patentgemäßen Sägeblatt möglich war, darüber hinaus jedoch das Bandsägeblatt unerklärlich abwich und aus der Schnittlinie ausbrach. Da die Ursache für diese Abweichung nicht gefunden werden konnte, wurde das Forschungsprojekt schlussendlich abgebrochen.

Es ist somit die Aufgabe der vorliegenden Erfindung eine Vorrichtung bereitzustellen, die die geschilderten Nachteile des Standes der Technik soweit als möglich vermeidet und so die Qualität und Ausbeute der erzeugten Lamellen verbessert.

Diese Aufgabe wird bei einer Vorrichtung gemäß dem Oberbegriff des Anspruchs 1 mit den Merkmalen des kennzeichnenden Teils des Anspruchs 1 gelöst. Die Unteransprüche betreffen weitere besonders vorteilhafte Ausgestaltungen der Erfindung.

Die erfindungsgemäße Vorrichtung zum Absägen von mindestens einer Lamelle von einem Substrat, insbesondere einem Rundholz, Kantholz, Holzverbundprodukt oder einer Schwarte, umfasst:
- ein Sägemittel, das dazu ausgebildet ist, die Lamelle im Bereich der Unterseite und/oder der Oberseite des Substrats oder von zumindest einer Seitenfläche des Substrats in einem Schnittwinkel von größer 20° schräg abzusägen;
- ein Transportmittel, das dazu ausgebildet ist, das Substrat in Längsrichtung dem Sägemittel entlang einer Transportrichtung zuzuführen;
- wobei das Sägemittel in der Vorrichtung in einer horizontalen oder vertikalen Schnittebene schräg längs zur Transportrichtung angeordnet ist,
- wobei das Sägemittel ein Sägeblatt für eine Kreissäge oder eine Bandsäge mit einer Vielzahl von Schneidezähnen mit einer Spanfläche und einem Zahngrund ist,
- wobei die Schneidezähne vorzugsweise entlang einer Umfangslinie des Sägeblatts ausgebildet sind,
- wobei zumindest ein Schneidezahn entlang der Spanfläche einen in einem Zahnspitzenbereich des Schneidezahns angeordneten Spanlenkabschnitt aufweist, wobei eine Spanlenkfläche des Spanlenkabschnitts ein bogenförmiges Profil mit einer negativen Krümmung aufweist.

Die Begriffe "unterhalb", "oberhalb" und "seitlich", wie in den Ansprüchen verwendet, beziehen sich auf die Betriebslage der Vorrichtung, also auf die Vorrichtung in einem erfindungsgemäß aufgestellten und funktionierenden Zustand. Ein Fachmann auf dem Gebiet der Erfindung kennt und versteht in diesem Zusammenhang die Begriffe "unterhalb", "oberhalb", "seitlich" sowie alle vergleichbaren Begriffe dieser Beschreibung in Bezug auf eine räumliche Position, Bewegung und/oder Richtung.

Die erfindungsgemäße Vorrichtung macht sich zunutze, dass sich durch den erfindungsgemäßen Schneidezahn mit dem Spanlenkbogen der Spanwinkel des Schneidezahns und der Winkel der Schrägstellung des Sägemittels beim Sägen des Substrats addieren, wodurch man einen besser schneidenden Eingriff der Zahnspitze erzielt, weil es dadurch möglich ist, die aus der gewünschten Schrägstellung verlängerte Schnittführung durch Vergrößern des Spanraums ohne gleichzeitiges Schwächen der Zahnwurzel für die Zahnstabilität auszugleichen. Wenn beispielsweise das Sägemittel mit einer Schrägstellung von 35° in das Substrat einschneidet und der Schneidezahn einen Spanwinkel von 35° aufweist, so ergibt sich durch die Addition der beiden Winkel ein wirksamer Spanwinkel von 70° an der Zahnspitze. Dies ist für die Spanbildung äußerst vorteilhaft, weil es durch den gegenüber herkömmlichen Vorrichtungen vergrößerten Spanraum gelingt, längere Späne zu produzieren, wofür aber der erwähnte vergrößerte Spanraum unabdingbar ist.

Die erfindungsgemäße Vorrichtung ermöglicht im Vergleich zum Stand der Technik eine Erhöhung der Sägegeschwindigkeit und eine verbesserte mechanische Stabilität der Schneidezähne. Das erfindungsgemäße Sägeblatt ermöglicht, dass der Spanwinkel der Schneidezähne im Vergleich zum Stand der Technik vergrößert werden kann, wodurch der Schneidezahn in einem Zahnspitzenbereich besonders spitz schneidend ist. Das Profil der Zahnbrust, das sich aus den bogenförmigen Profilen von Spanlenkfläche und Räumfläche ergibt, ermöglicht mechanisch stabile Schneidezähne. Darüber hinaus erlauben die bogenförmigen Profile von Spanlenkfläche und Räumfläche eine verbesserte Spanlenkung und ein verbessertes Spanausräumen. Verglichen dazu sind die aus dem Stand der Technik bekannten Sägeblätter durch den Spanwinkel der Spanfläche limitiert. Wird bei derartigen Sägeblättern, insbesondere bei solchen mit dreieckigen Zahnformen, der Spanwinkel zu groß gewählt, werden die Schneidezähne instabil, beispielsweise durch sichtbare Rillen und Riefen an der Schnittfläche, und bruchgefährdet. Aus diesem Grund betragen die Spanwinkel solcher Sägeblätter üblicherweise maximal 28 Winkelgrad.

Durch die erfindungsgemäße Gestaltung der Schneidezähne der Sägemittel in Zusammenwirkung mit der Schrägstellung des Sägemittels mit sich daraus ergebendem reduzierten Schnittdruck an den Schneidezähnen ergibt sich im Vergleich mit dem Stand der Technik eine Verbesserung, die die erfindungsgemäße auch für das Dünnschnittsägen verwendbar macht. Beispielsweise ist es mit der Erfindung möglich, eine etwa 1mm breite Schnittfuge zu realisieren, gleichzeitig aber das Sägemittel als Sägeband mit einer Bandstärke von 1,1 / 1,25 / 1,35 / 1,47 mm vorzusehen, das ausreichend gespannt wird, indem durch die spezielle Geometrie der Zahnung beim Schneiden der Lamelle vom Substrat vor bzw. an der Zahnspitze durch das Wegbiegen der Lamelle eine erste Spaltung der Lamelle vom Substrat erfolgt, durch die sich die Fuge öffnet. Das Wegbiegen wird mit einem Spaltkeil oder einem, vorzugsweise in seiner Schrägstellung einstellbaren Folgeband verstärkt. Der Spaltkeil bzw. das Folgeband hebt das Schnittgut vom Band ab (erster Spaltpunkt). Dadurch gelingt es beispielsweise, Lamellen mit bisher nicht erreichter Genauigkeit in Maß und Leistung auch bei großen Schnittbreiten von 400, 500 und 600 mm mit dünner Fuge herzustellen. Die Herstellung der Schneidezähne kann durch Formschleifen (z.B. mit kurzer Strecke an der Spitze parallel, danach keilförmig gerade oder sphärisch im Bogen bis zum Spaltpunkt), mit Zahnstärken, die geringer sind als die Bandstärke, aber auch gleich dick wie oder geringfügig größer als die Bandstärke sein können, erfolgen.

Bisher erfolgte das Dünnschnittsägen typischerweise mit dünnen Sägebändern von z.B. 0,7 mm plus einem Überstand für die Erzielung einer 1,1 mm breiten Fuge, bei Schnittbreiten bis ca. 300 mm mit reduzierten Vorschub. Bei einer solchen Konfiguration wurden nachteiligerweise aber keine verwertbar langen Späne generiert, sondern überwiegend feines Holzmehl als Abfallprodukt erzeugt, das auch gesundheitsschädlich ist (Feinstaubbelastung!).

Die vorliegende Erfindung wendet sich von der bisherigen Fachmeinung des Verwendens von dünneren Sägebändern für dünne Schnittfugen ab und sieht stattdessen den Einsatz von stabilen Sägemitteln vor, die stabil eingespannt werden können und ausreichend große Durchmesser von Führungsrollen zulassen, um entstehende Wärme besser abführen zu können, sowie im Bereich der Zahnspitze der Schneidezähne des Sägemittels bereits eine leichte Keilbildung, z.B. 0,1 mm an jeder Seite der Schneidezähne bewirken, indem das Öffnen der Fuge durch die Erzeugung von Splintspannungen genutzt wird. Versuche haben gezeigt, dass mit der erfindungsgemäßen Vorrichtung eine dünnere Schnittfuge als die Sägebandstärke erhalten, wird, wodurch es gelingt, die anfallende Spanmenge gegenüber dem Stand der Technik auf ca. die Hälfte zu reduzieren. Zusätzlich entsteht ein gegenüber dem Stand der Technik ein um bis zu einem Drittel in der Breite und Tiefe vergrößerter Spanraum im Substrat im Bereich der Zahnspitzen des Sägemittels. Diese Vergrößerung des Spanraums ermöglicht einerseits, die Bildung von längeren Spänen anstelle des unerwünschten Sägemehls, andererseits entsteht eine sehr glatte Schnittfläche, die es ermöglicht, die geschnittenen Lamellen ohne weitere Bearbeitung der Schnittflächen, d.h. im sägerauen Zustand zu verkleben.

Gemäß einer vorteilhaften Ausführung weist der zumindest eine Schneidezahn des Sägemittels, der den Spanlenkabschnitt aufweist, einen Räumabschnitt auf, der proximal des Spanlenkabschnitts angeordnet ist, und weist eine Räumfläche des Räumabschnitts ein bogenförmiges Profil mit einer negativen Krümmung auf.

Bevorzugt weisen alle Schneidezähne des Sägemittels einen Spanlenkabschnitt und einen Räumabschnitt auf.

Es ist weiters bevorzugt, wenn zumindest eines, vorzugsweise alle Profile der Spanlenkflächen und der Räumflächen der Schneidezähne kreisbogenförmig ausgebildet ist/sind. Die Erzeugung des Spans kann so besser gesteuert und das Spanausräumen weiter verbessert werden.

Gemäß einer vorteilhaften Ausführung umfasst die erfindungsgemäße Vorrichtung ein Sägemittel mit zumindest einem Schneidezahn, bei dem ein Spanwinkel der Spanlenkfläche/n mehr als 28 Winkelgrad, bevorzugt mehr als 33 Winkelgrad, besonders bevorzugt in etwa 38 Winkelgrad, beträgt und/oder ein Freiwinkel der Spanlenkfläche/n in etwa 2 bis 12 Winkelgrad, bevorzugt 3 bis 8 Winkelgrad, beträgt.

In einer zweckmäßigen Ausgestaltung der Erfindung ist der Durchmesser des kreisbogenförmigen Profils der Räumfläche/n des zumindest einen Schneidezahns größer als der Durchmesser des kreisbogenförmigen Profils der Spanlenkfläche/n.

In einer besonders bevorzugten Ausführungsform der erfindungsgemäßen Vorrichtung ist die Schrägstellung des Sägemittels verstellbar, wobei das Sägemittel vorzugsweise um einen Drehpunkt schwenkbar ist, der im Wesentlichen in der Achse des Sägemittels an einer Anschlagseite des Substrats oder im Wesentlichen in der Höhe einer Auflagefläche des Transportmittels für das Substrat liegt. Durch eine Erhöhung der Schrägstellung des Sägemittels kann der auf jeden Zahn wirkende Schnittdruck reduziert werden. Dadurch ist es wiederum möglich, die Zähne des Sägemittels konstruktiv so auszulegen, dass sie in ihrer Breite, am Rücken bis zur Zahnbrust und an der Zahnwurzel gegenüber bisher verwendeten Zähnen von Sägemitteln verringert sind. Das schafft mehr Spanraum für eine größere Spanmenge bei gleicher Zahnteilung, und führt dadurch zu einem reduzierten Schnittwiderstand am Zahn. Die erfindungsgemäße Vorrichtung ermöglicht es, schräg, ziehend mit der Faser des Substrats sägen zu können. Die Schrägstellung des Sägemittels wird an die Holzart, die Dimension des Substrats, die Schnittlänge und die Holzfeuchte angepasst, wobei auch die Spanlänge gesteuert werden und die Erzeugung von Holzstaub minimiert werden kann.

In einer Ausgestaltung der Erfindung ist vorgesehen, dass ein Spaltkeil oder ein Folgeband im Bereich des Schneidespalts dem Sägemittel nachgelagert angeordnet ist, wobei vorzugsweise der Spaltkeil bzw. das Folgeband schräg längs zur Transportrichtung angeordnet ist, wobei die Vorrichtung im Bereich des Spaltkeils einen Sensor aufweist, der an zumindest einem Messpunkt oder entlang zumindest eines Messbereichs zumindest einen Qualitätsparameter der Lamelle ermittelt.

Durch das Einbringen des Sensors im Bereich des Spaltkeils wird der Sensor so nahe als möglich am Sägemittel angeordnet. Zum einen ist der Sensor dadurch noch vor etwaigen Schäden durch ein Brechen oder Reißen des Sägemittels geschützt, zum anderen werden die Qualitätsparameter der abgesägten Lamellen, beispielsweise die Stärke der Lamellen oder deren Abweichung von einer Soll-Stärke, möglichst frühzeitig nach dem Sägen ermittelt. Hierdurch sind Dimensionsabweichungen frühzeitig feststellbar und die notwendigen Anpassungen am Sägemittel können zeitnah durchgeführt werden. Qualität und Ausbeute der erzeugten Lamellen können mittels der erfindungsgemäßen Vorrichtung erhöht werden.

In einer bevorzugten Ausführungsform weist die erfindungsgemäße Vorrichtung ein Steuermittel auf, welches dazu ausgebildet, das Transportmittel, insbesondere eine Vorschubgeschwindigkeit des Transportmittels und/oder die Sägegeschwindigkeit des Sägemittels, sowie vorzugsweise auch die Schrägstellung in Abhängigkeit von der Schnitthöhe (Holzstärke) für gesichertes Ausräumen in der Fuge vorzugsweise beim Vorschub, in Abhängigkeit des/der vom Sensor ermittelten Qualitätsparameter/s in Echtzeit zu steuern. Mithilfe des Steuermittels kann die unerwünschte Bildung von Holzstaub (Feinspänen) minimiert werden.

Zweckmäßig liegt der zumindest eine Messpunkt oder ein Mittelpunkt oder ein Endpunkt des zumindest einen Messbereichs im Wesentlichen auf einer Mittelquerlinie der der Lamelle zugewandten Oberfläche des Spaltkeils bzw. des Folgebands.

Besonders zweckmäßig weist der zumindest eine Messpunkt oder der Mittelpunkt oder ein Endpunkt des zumindest einen Messbereichs einen durchschnittlichen Abstand von in etwa 0,15 bis 0,5 Meter, vorzugsweise in etwa 0,25 bis 0,45 Meter, insbesondere in etwa 0,35 Meter, zu den Zahnspitzen von Schneidezähnen des Sägemittels auf.

Vorteilhaft ist der zumindest eine Sensor in den Spaltkeil eingebracht und/oder einteilig mit dem Spaltkeil ausgebildet. Alternativ liegt der Sensor dem Spaltkeil im Bereich des Messpunkts oder des Messbereichs gegenüber und ist die Lamelle zwischen dem Spaltkeil und dem Sensor wegführbar. Hierdurch ist der Sensor möglichst nahe am Sägemittel angeordnet und durch den Spaltkeil vor etwaiger Beschädigung geschützt. Der Spaltkeil bildet außerdem mechanisch robuste Messbedingungen.

In einer vorteilhaften Ausführung der Erfindung ist der Sensor an einer Rolle angebracht oder einteilig mit einer Rolle ausgebildet, wobei die Rolle gegebenenfalls zumindest berührend an der Lamelle anliegt. Die Qualitätsparameter der Lamelle können auf diese Weise unter direktem Kontakt mit der Lamelle gemessen werden.

Zweckmäßig ist der zumindest eine Qualitätsparameter die Stärke der Lamelle, die Breite der Lamelle, Länge der Lamelle, die Oberflächenrauigkeit der Lamelle, der Feuchtegehalt der Lamelle und/ oder eine Abweichung eines der vorstehenden Qualitätsparameter.

In einer bevorzugten Ausführungsvariante der Erfindung greift das Sägemittel unter einem Schnittwinkel von bis zu 60 Winkelgrad, vorzugsweise von 20 bis 50 Winkelgrad, insbesondere von 30 bis 45 Winkelgrad, je nach Holzart und Schnittbreite in das Substrat ein. Hierdurch wird, im Vergleich zu nach dem Stand der Technik angewandten Schnittwinkeln von üblicherweise 5 bis 17 Winkelgrad, die Schnittkraft reduziert und es werden glattere Schnittflächen ohne Ausrisse mit verbesserten Qualitätsparametern im Gleichschnitt mit der Faser ziehend erzeugt. Bei größerem Schnittwinkel können beim Anschnitt mehr Zähne versetzt, nicht zugleich in das Substrat einschneiden, was zu einem sanfteren Anschnitt mit weniger Erschütterung führt. Die Qualität und Ausbeute der erzeugten Lamellen wird so weiter erhöht und durch die Veränderung des Schnittwinkels kann vor allem die Länge des Spans gesteuert und so planbar gemacht werden, da mit größerem Schnittwinkel die Länge des Spans ansteigt. Hierdurch können vorteilhaft Form und Größe der Späne optimiert werden, um das Ausräumen der Späne aus den Sägemittel zu verbessern. Außerdem wird vorteilhaft auch eine dünnere Fuge und so ein genaueres Maß der Schnittware erreicht, wobei Splintspannungen im Bereich des Spaltkeils das "Öffnen" im Bereich der Schnittfuge unterstützen.

Zweckmäßig, insbesondere für die Verarbeitung von blockförmigen Substraten aus Holz, ist das Sägemittel eine Bandsäge mit einem umlaufenden Sägeband, wobei das Substrat in Längsrichtung durch das umlaufende Sägeband durchführbar ist, wobei das Sägeband an seinen Schneiden bzw. Zahnspitzen kleiner gleich der Bandstärke, oder gleich stark wie die Bandstärke, oder stärker als die Bandstärke mit einem seitlichen Überstand an einer oder beiden Seiten ausgebildet ist, wobei vorzugsweise die Vorrichtung eine im Wesentlichen horizontale oder vertikale Bandführung für das umlaufende Sägeband aufweist. Mit dieser Ausführungsform kann das Öffnen der Schnittfuge durch Splintspannungen beim Anschneiden des Substrats für das Abtrennen von Lamellen bereits am Sägeband erfolgen und mit einem Folgeband oder Spaltkeil weiter unterstützt werden, wobei das Sägeband aufgrund seiner stabilen, relativ dicken Konstruktion dazu beiträgt, die Lamellen vom Substrat wegzubiegen, um Freiraum für die Späne zu schaffen und um eine dünnere Schnittfuge ohne übermäßiges Erwärmen des Band zu erhalten.

In einer bevorzugten Ausführungsvariante der Erfindung weist die Vorrichtung zumindest zwei Sägemittel zum gleichzeitigen oder sukzessiven Absägen von mindestens zwei Lamellen auf.

Eine erfindungsgemäße Vorrichtung kann beispielsweise Lamellen bis in etwa 0,04 Meter Stärke sägen und diese mittels des Spaltkeils nach unten biegen und abführen.

In einer weiteren Ausgestaltung der Erfindung ist ein Folgeband oder ein verstellbarer Spaltkeil mit reduzierter Stärke vorgesehen, wobei eine Stärke des Folgebands kleiner oder gleich der Schnittfuge des Sägemittels ist und eine Stärke des Spaltkeils mit reduzierter Stärke größer als die Schnittfuge des Sägemittels ist. Lamellen, die stärker als ca 0,04 Meter sind, können so mit geringerer Biegung mittels des Folgebands oder des verstellbaren dünneren Spaltkeils abgeführt werden.

Weitere Einzelheiten, Merkmale und Vorteile der Erfindung ergeben sich aus den nachfolgenden Erläuterungen von in den Zeichnungen schematisch dargestellten Ausführungsbeispielen. In den schematischen Zeichnungen zeigen:
- Fig. 1 in einer Schnittansicht von der Seite ein erstes Ausführungsbeispiel einer erfindungsgemäßen Vorrichtung beim Absägen einer Lamelle;
- Fig. 2A einen vergrößerten Ausschnitt A der Vorrichtung aus Fig. 1, wobei die Lamelle der Übersichtlichkeit halber nicht dargestellt ist;
- Fig. 2B einen vergrößerten Ausschnitt A der Vorrichtung aus Fig. 1 gemäß der Figur 2A, wobei der Spaltkeil als dünnes Folgenband ausgebildet ist;
- Fig. 3 in einer Ansicht von oben die Vorrichtung aus Fig. 1, wobei das Sägemittel unter einem Schnittwinkel in das Substrat eingreift;
- Fig. 4 einen Abschnitt von fünf Schneidezähnen eines Sägemittels in Form eines Sägeblatts für eine Bandsäge gemäß der Erfindung;
- Fig. 5 einen Schneidezahn eines Sägeblatts gemäß der Erfindung; und
- Fig. 6 einen vergrößerten Ausschnitt A der Fig. 5.

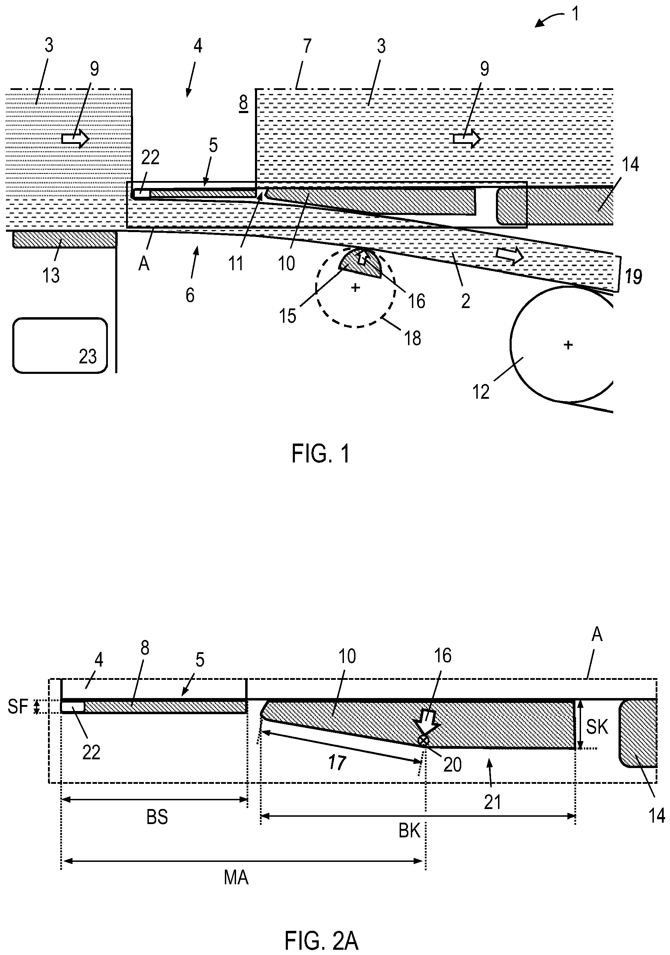

Die Figuren 1 bis 3 zeigen eine erfindungsgemäße Vorrichtung 1 zum Absägen einer Lamelle 2 von einem blockförmigen Substrat 3 gemäß einem ersten Ausführungsbeispiel.

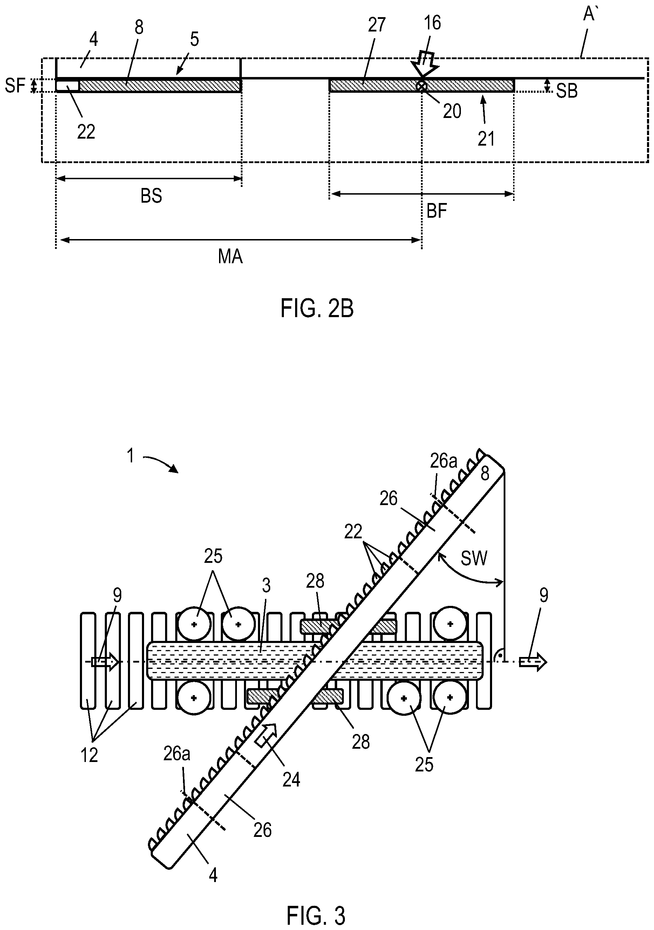

Die Vorrichtung 1 umfasst ein Sägemittel 4 mit einer im Wesentlichen horizontal angeordneten Schnittebene 5, das dazu ausgebildet ist, die Lamelle 2 im Bereich der Unterseite 6 des Substrats 3 abzusägen. Das Sägemittel 4 ist eine Bandsäge mit einem um zwei Umlenkrollen 26 mit Drehachsen 26a (siehe Fig. 3) umlaufenden Sägeband 8. Das Sägeband 8 wird durch Bandführungen 28 in Position gehalten. Die Umlenkrollen 26 sind so konstruiert, dass sie auch die Funktion von Bandführungen erfüllen, weil aus der Schrägstellung des Sägebands 8 und dem Spanwinkel Kräfte auf das Sägeband 8 wirken, die auf das Sägeband 8 eine Tendenz zum Abziehen des Sägebands 8 von den Umlenkrollen 26 ausüben. Um das zu verhindern, können die Umlenkrollen 26 beispielsweise geneigt bzw. schräg gestellt werden und/oder optimierte Bombierungen ihrer Laufflächen aufweisen. Es kann auch eine Überwachung der Sägebandlage implementiert werden und die Neigung/Schrägstellung der Umlenkrollen 26 in Abhängigkeit von der Sägebandlage gesteuert werden. Das Substrat 3 ist in Längsrichtung, die sich im Wesentlichen entlang der Längsachse 7 des Substrats 3 erstreckt, durch das umlaufende Sägeband 8 durchführbar. Alternativ kann das Sägemittel 4 auch in Form mehrerer paralleler Bandsägen, gegebenenfalls auch mit im Wesentlichen vertikal angeordneter/n Schnittebene/n, und/oder als eine oder mehrere Kreissägen ausgebildet sein.

Das Substrat 3 wird dem Sägemittel 4 entlang einer Transportrichtung 9, die im Wesentlichen parallel zur Längsrichtung bzw. Längsachse 7 des Substrats 3 ist, zugeführt werden. Ist das Substrat 3 beispielsweise ein entrindeter Baumstamm oder ein unbesäumtes Schnittholz, wie eine Bohle oder ein Kantholz im Blockschnitt, so verläuft die Wuchsrichtung des Baumes/ Holzes im Wesentlichen entlang der Längsachse 7 beziehungsweise der Transportrichtung 9. Alternativ kann das Substrat 3 quer oder in einem Winkel zu seiner Längsachse 7 zugeführt werden. Das Zuführen beziehungsweise Abführen des Substrats 3 kann mittels einem oder mehrerer Transportmittel 12 erfolgen, beispielsweise mittels einem angetriebenen Roll- oder Förderband.

Ein Spaltkeil 10 gemäß Figur 2A ist im Bereich des Schneidespalts 11 dem Sägemittel 4 nachgelagert angeordnet. Die Lamelle 2 ist unterhalb des Sägemittels 4 und des Spaltkeils 10 wegführbar. Das Wegführen der Lamelle 2 erfolgt in erster Linie mittels der Schwerkraft und kann mittels einem oder mehrerer Transportmittel 12 unterstützt werden, beispielsweise mittels einem angetriebenen Roll- oder Förderband. Der Spaltkeil 10 kann einen zumindest teilweise in Richtung des Schneidespalts 11 konisch zulaufenden Querschnitt aufweisen. Alternativ kann der Spaltkeil 10 einen vollständig konischen, oder einen kurvig abgerundeten, oder einen rechteckigen oder elliptischen Querschnitt aufweisen.

Weiters kann die Vorrichtung 1 eine Zuführauflage 13, beispielsweise eine sogenannte "Lippe", eine Abführauflage 14, beispielsweise einen Trageteller, Vertikalführungen 25 für Zufuhr und Abfuhr/Auszug, und/ oder eine horizontale Zuführung aufweisen, um das Zuführen beziehungsweise das Abführen des Substrats 3 zu verbessern. Eine Bandführung 28 für das Sägeband 8 wird einstellbar vorzugsweise in 90 Winkelgrad zum Band und/ oder in einem gewählten Schnittwinkel SW an das Substrat herangeführt.

Die Vorrichtung 1 weist im Bereich des Spaltkeils 10 einen Sensor 15 auf. Alternativ kann die Vorrichtung 1 im Bereich des Spaltkeils 10 und/ oder in diesem Bereich nachgelagerten Bereichen weitere Sensoren 15 aufweisen. Der Sensor 15 ist dazu ausgebildet, an zumindest einem Messpunkt 16 oder entlang zumindest eines Messbereichs 17 zumindest einen Qualitätsparameter der Lamelle 2 zu ermitteln. Die Länge des Messbereichs 17 kann durch die Messlänge des Sensors 15, die Vorschubgeschwindigkeit des Substrats 3 in Kombination mit einer festgelegten Messzeit des Sensors 15 und/ oder durch mehrere Sensoren 15 mit definierten Abständen bestimmt sein. Der Sensor 15 kann als mechanischer Sensor, beispielsweise an einer Rolle 18, die, gegen die Lamelle 2 angedrückt, zumindest berührend an dieser anliegt, angebracht oder einteilig mit einer Rolle 18 ausgebildet sein. Der Sensor 15 kann als optischer Sensor, beispielsweise als Lasersensor, ausgebildet sein. Ist der Sensor 15 an einer Rolle 18 angebracht oder einteilig mit der Rolle 18 ausgebildet, so kann die Länge des Messbereichs 17 durch eine teilweise, eine ganze oder mehrere Umdrehungen der Rolle 18 definiert sein.

Der Sensor 15 kann in den Spaltkeil 10 eingebracht sein und/oder einteilig mit dem Spaltkeil 10 ausgebildet sein. Der Messpunkt 16 oder ein Mittelpunkt/Endpunkt des Messbereichs 17 kann dann im Wesentlichen auf einer Mittelquerlinie 20 der der Lamelle 2 zugewandten Oberfläche 21 des Spaltkeils 10 liegen. Der Messpunkt 16 oder der Mittelpunkt/ Endpunkt des Messbereichs 17 kann einen durchschnittlichen Messabstand MA von in etwa 0,2 bis 0,4 Meter, vorzugsweise in etwa 0,25 bis 0,35 Meter, insbesondere in etwa 0,3 Meter, zu den Zahnspitzen von Schneidezähnen 22 des Sägemittels 4 aufweisen. Ein Messpunkt 16 oder der Mittelpunkt/Endpunkt des Messbereichs 17 eines Sensors 15, der gemäß Figur 1 dem Spaltkeil 10 gegenüberliegt, wobei die Lamelle 2 zwischen dem Spaltkeil 10 und dem Sensor 15 wegführbar ist, kann einen dem Abstand MA entsprechenden Abstand aufweisen. Die Breite BS des Sägebands 8 weist typische Werte von in etwa 0,08 bis 0,28 Meter auf. Die Breite BK des Spaltkeils 10 weist typische Werte von in etwa 0,2 bis 0,4 Meter auf. Die Stärke SK des Spaltkeils 10 kann von der Schnittfuge SF und der Stärke 19 der anzusägenden Lamelle 2 abhängen, worauf weiter unten näher eingegangen wird.

Der/die Qualitätsparameter kann/können die Stärke/Dicke 19 der Lamelle 2, die Länge der Lamelle 2, die Breite der Lamelle 2, die Oberflächenrauigkeit der Lamelle 2, der Feuchtegehalt der Lamelle 2 und/ oder eine Abweichung/Veränderung eines der vorstehenden Qualitätsparameter sein.

Die Vorrichtung 1 kann zusätzlich ein Steuermittel 23 aufweisen, welches dazu ausgebildet ist, das/die Transportmittel 12, insbesondere die Vorschubgeschwindigkeit des/der Transportmittel/s 12 und/ oder die Sägegeschwindigkeit des Sägemittels 4, in Abhängigkeit des/der vom Sensor 15 ermittelten Qualitätsparameter/s im Wesentlichen in Echtzeit zu steuern. Hierdurch können Vorschubgeschwindigkeit und/oder Sägegeschwindigkeit vollkommen automatisiert und in Echtzeit angepasst, beispielsweise verringert oder erhöht, werden.

Das Sägemittel 4 kann unter einem Schnittwinkel SW in das Substrat 3 eingreifen, wie dies in Figur 3 dargestellt ist. Gemäß Figur 3 ist der Schnittwinkel SW der Winkel zwischen der Sägerichtung 24 des Sägemittels 4 und einer Normalen auf die Transportrichtung 9. Der Schnittwinkel SW kann einen Wert bis 60 Winkelgrad, vorzugsweise zwischen 20 und 50 Winkelgrad, insbesondere zwischen 30 und 45 Winkelgrad, aufweisen. Der Schnittwinkel SW kann beispielsweise den Wert 10, 15, 20, 25, 30, 35, 40, 45, 50, 55 oder 60 Winkelgrad oder einen Wert zwischen diesen Beispielen aufweisen. Wird ziehend mit der Faser und in dem Schnittwinkel SW zum Substrat 3 gesägt, benötigt man weniger Schnittkraft und es werden glatte Schnittflächen ohne Ausrisse mit verbesserten Qualitätsparametern erzeugt.

Alternativ kann eine erfindungsgemäße Vorrichtung 1 zwei oder mehr Sägemittel 4 zum gleichzeitigen oder sukzessiven Absägen von zwei oder mehr Lamellen 3 aufweisen. Die Sägemittel 4 können hierzu parallel oder hintereinander angeordnet sein.

Es ist auch möglich, dass das oder die Sägemittel 4 in einer im Wesentlichen vertikal angeordneten Schnittebene in das Substrat 3 eingreifen, also, dass das oder die Sägemittel 4 vertikal angeordnet sind, wobei dann auch der oder die Spaltkeile 10 vertikal angeordnet sind. Die Lamellen 3 werden dann zur Seite weggeführt.

Eine erfindungsgemäße Vorrichtung 1 kann beispielsweise Lamellen 3, insbesondere Bretter, bis in etwa 0,04 Meter Stärke sägen und diese mittels des Spaltkeils 10 nach unten biegen und abführen. Alternativ oder zusätzlich zum Spaltkeil 10 kann ein umlaufendes Folgeband 27 ohne Schneidezähne gemäß Figur 2B oder ein verstellbarer Spaltkeil 10 mit reduzierter Stärke vorgesehen werden. Lamellen 3, insbesondere Bohlen, die stärker als in etwa 0,04 Meter sind, können so mit geringerer Biegung mittels eines solchen Folgebands 27 oder eines verstellbaren dünneren Spaltkeils 10 abgeführt werden.

Die Stärke SK des Spaltkeils 10 kann also an die Stärke der Lamellen 3 angepasst werden. Dabei kann als Richtlinie angenommen werden, dass bei einer Schnittfuge SF des Sägemittels 4 von in etwa 2,2 Millimeter ein Spaltkeil 10 mit reduzierter Stärke eine Stärke SK von mehr als in etwa 2,3 Millimeter aufweist. Ein Spaltkeil 10 mit "normaler", also nicht reduzierter, Stärke weist eine Stärke von mehr als in etwa 3 mm als kurzes Band, also mit im Wesentlichen rechteckigem Querschnitt, oder keilförmig gemäß Figur 2A eine Stärke von mehr als in etwa 5 mm im hinteren Bereich auf.

Ist der Spaltkeil 10 gemäß Figur 2B als Folgeband 27 ausgebildet, so kann als Richtlinie angenommen werden, dass bei einer Schnittfuge SF des Sägemittels 4 von in etwa 2,2 Millimeter das Folgeband 27 eine Stärke SB von in etwa 2 Millimeter aufweist; vorzugsweise hat das Folgeband 27 eine Stärke SB die maximal der Schnittfuge SF des Sägemittels 4 entspricht. Das Folgeband 27 schützt das Sägeband 8 vor Kontakt und Erwärmen durch Reibung, ohne die Lamelle 3 zu stark nach unten wegzubiegen.

Ein Sägewerk oder ein Sägeverfahren mit einer erfindungsgemäßen Vorrichtung 1 kann folgende erfindungswesentliche Vorteile aufweisen:
- Durch eine horizontale Bandsäge mit umlaufendem Sägeband 8 können Lamellen 2, insbesondere Holzbretter, schräg ziehend mit der Faser von einem blockförmigen Substrat 3, insbesondere einem Baumstamm, abgesägt werden, wobei das Substrat 3 schwingungsfrei auf der Lippe 13, dem Spaltkeil 10 und/ oder dem Drehteller 14 aufliegt.
- Unmittelbar nach dem Sägeband 8 wird die Lamelle 2 unter erfindungsgemäßem "Öffnen" der Fuge durch Splintspannungen im Bereich des Spaltkeils vom Substrat nach unten weggeführt und weggebogen, wobei insbesondere der Spanaustritt mittels der Schwerkraft unterstützt wird und so das Sägeband 8 besser von Spänen befreit wird.
- Durch Einbringen des Sensors 15 im Bereich des Spaltkeils 10 wird der Sensor 15 vom Spaltkeil 10 geschützt, insbesondere bei einem Riss des Sägebands 8.
- Durch das Messen der Qualitätsparameter mittels des Sensors 15 bereits im Bereich des Spaltkeils 10 sind verbesserte Qualitätsparameter, insbesondere eine maximale Abweichung der Stärke 19 der Lamelle 2, also eine Differenz von Ist-Stärke und Soll-Stärke, von weniger als beispielsweise 0,0002 Meter, möglich.
- Bei Ansteigen obiger Abweichung oder bei unerwünschter Änderung eines anderen Qualitätsparameters kann sofort, insbesondere mittels des Steuermittels 23, reagiert werden, beispielsweise kann/können die Vorschubgeschwindigkeit des Transportmittels 12 und/oder die Sägegeschwindigkeit des Sägemittels 4 angepasst, beispielsweise reduziert, werden.

Durch die erfindungsgemäße Gestaltung der Schneidezähne 22 der Sägemittel 4 in Zusammenwirkung mit der Schrägstellung des Sägemittels 4 mit sich daraus ergebendem reduzierten Schnittdruck an den Zahnspitzen der Schneidezähne 22 ergibt sich im Vergleich mit dem Stand der Technik eine Verbesserung, die die erfindungsgemäße auch für das Dünnschnittsägen verwendbar macht. Wie am besten in Fig. 1 zu sehen, erfolgt beim Abschneiden der Lamelle 2 vom Substrat 3 vor bzw. an der Zahnspitze des Schneidezahns 22 durch das Wegbiegen der Lamelle 2 eine erste Spaltung der Lamelle 2 vom Substrat 3, durch die sich die Fuge öffnet. Das Wegbiegen der Lamelle 2 wird mit einem Spaltkeil 10 und/oder einem, vorzugsweise in seiner Schrägstellung einstellbaren, Folgeband 27 verstärkt. Durch das Wegbiegen der Lamelle 2 entsteht zwischen dem Sägemittel 4 und der Lamelle 2 ein Freiraum, der zur Abfuhr von Spänen dient. Der Freiraum erstreckt sich bis vor das Ende der Zahnspitze des Schneidezahns 22, wobei er in diese Richtung V-förmig zusammenläuft. Der Spaltkeil 10 bzw. das Folgeband 27 heben das Schnittgut vom Sägemittel 4 ab (erster Spaltpunkt). Dadurch gelingt es, Lamellen mit bisher nicht erreichter Genauigkeit in Maß und Leistung auch bei großen Schnittbreiten von 400, 500 und 600 mm mit dünner Fuge herzustellen. Da sich der Freiraum durch das Abheben der Lamelle 2 bis vor die Zahnspitze der Schneidezähne 22 ausbildet, kann die Stärke der Schneidezähne 22 im Verhältnis zur Bandstärke des Sägemittels 4 reduziert werden. Die Schneidezähne 22 können aber auch ungefähr gleich stark wie die Bandstärke oder geringfügig stärker ausgebildet sein.

Die erfindungsgemäße Vorrichtung 1 eignet sich auch hervorragend für die Durchführung von Mittelschnitten, d.h. die Aufspaltung eines Substrats 3, z.B. eines Bretts, in zwei Lamellen 2 mit im Wesentlichen gleicher Lamellenstärke 19, die der Hälfte der Substratstärke entspricht.

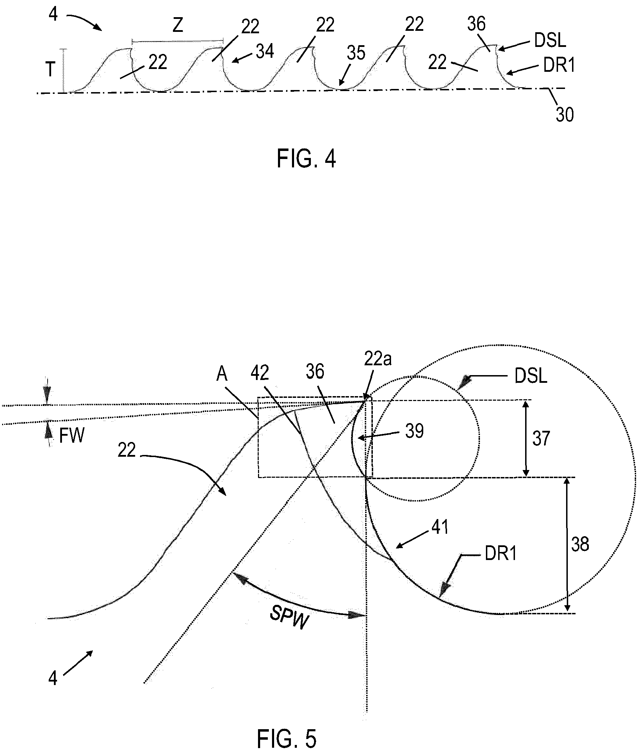

Im Folgenden wird auf die Konfiguration der Schneidezähne 22 des Sägemittels 4 eingegangen, das in Fig. 4 ausschnittsweise als ein Sägeblatt für eine Bandsäge dargestellt ist, wobei in Fig. 4 ein Abschnitt mit fünf Schneidezähnen 22 entlang einer Umfangslinie 30 des Sägeblatts dargestellt ist. Die Anordnung und Form der Schneidezähne 22 am Sägemittel 4 kann über ihre Zahnteilung Z und Zahntiefe T charakterisiert werden. Bei Bandsägen ist die Zahntiefe T im Wesentlichen rechtwinkelig zur Umfangslinie 30 des Sägeblatts definiert. Typische Werte für Anwendungen gemäß der Erfindung sind eine Zahntiefe T der Schneidezähne 22 von ca. 0,012 Meter und eine Zahnteilung Z der Schneidezähne 22 von ca. 0,025 Meter. Die Erfindung ist auf diese Werte aber in keiner Weise eingeschränkt. Bei scheibenförmigen Sägeblättern für Kreissägen erstreckt sich die Zahntiefe der Schneidezähne entlang einer im Wesentlichen radialen Richtung.

Jeder Schneidezahn 22 weist eine Spanfläche 34, einen Zahngrund 35 und eine Zahnspitze 22a auf. Gemäß der vorliegenden Erfindung weisen die Schneidezähne 22 entlang der Spanfläche 34 einen Spanlenkabschnitt 37 und einen ersten Räumabschnitt 38 auf, wie dies in Figur 5 näher dargestellt ist. Der Spanlenkabschnitt 37 ist in einem Zahnspitzenbereich 36 des Schneidezahns 22 angeordnet. Der erste Räumabschnitt 38 ist proximal des Spanlenkabschnitts 37 angeordnet, also näher zur Umfangslinie 30 als der Spanlenkabschnitt 37 oder, im Falle einer Kreissäge, näher zum Mittelpunkt des Kreissägeblatts. Der Spanlenkabschnitt 37 weist eine Spanlenkfläche 39 mit einem bogenförmigen Profil auf, das in den dargestellten Beispielen ein kreisbogenförmiges Profil mit einem Durchmesser DSL ist. Der erste Räumabschnitt 38 weist eine Räumfläche 41 mit einem bogenförmigen Profil auf, das in den dargestellten Beispielen ein kreisbogenförmiges Profil mit einem Durchmesser DR1 ist. Im Beispiel gemäß Fig. 4 beträgt der Durchmesser DR1 ca. 0,015 Meter, und liegt der Durchmesser DSL ca. zwischen 0,005 Meter und 0,009 Meter. Der Durchmesser DR1 und/oder der Durchmesser DSL können aber jede beliebige Länge aufweisen, beispielsweise in einem Bereich von DR1 = 0,005 - 0,1 Meter und/oder DSL = 0,0025 - 0,025 Meter.

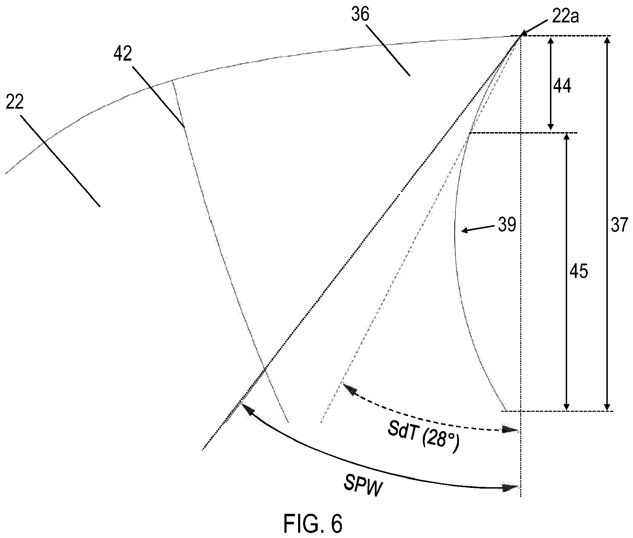

In dem dargestellten Beispiel des Schneidezahns 22 gemäß Figur 5 und Figur 6, wobei Figur 6 einen vergrößerten Ausschnitt A von Figur 5 darstellt, beträgt ein Freiwinkel FW der Spanlenkfläche 39 in etwa 3 Winkelgrad. Der Freiwinkel FW kann beispielsweise in einem Bereich von FW = 1, 2, 3, 4, 5, 6, 7, 8, 9 oder 10 Winkelgrad, insbesondere in einem Bereich von FW = 3, 4, 5, 6, 7, 8 Winkelgrad, geschliffen werden. Ein Spanwinkel SPW der Spanlenkfläche 39 beträgt erfindungsgemäß mehr als 28 Winkelgrad, also mehr als eine bisher aus dem Stand der Technik bekannte, gerade und schräg geschliffene Zahnbrust (siehe auch strichlierte Linie in Figur 6). Bevorzugt beträgt der erfindungsgemäße Spanwinkel SPW der Spanlenkfläche 39 mehr als 33 Winkelgrad, besonders bevorzugt in etwa 38 Winkelgrad. Der Spanwinkel SPW kann jeden beliebigen Betrag aufweisen, beispielsweise in einem Bereich von SPW = 29 - 50 Winkelgrad, beispielsweise 29, 30, 31, 32, 33, 34, 35, 36, 37, 38, 39, 40, 41, 42, 43, 44, 45, 46, 47, 48, 49 oder 50 Winkelgrad.

Aus Figur 6 ist gut ersichtlich, wie es ein erfindungsgemäßer Schneidezahn 22 ermöglicht, dass der Spanwinkel SPW größer ausgebildet werden kann als bei einem Schneidezahn gemäß dem Stand der Technik, wo der Spanwinkel SPW üblicherweise 28° beträgt (siehe auch strichlierte Linien). Das bogenförmige Profil der Spanlenkfläche 39 weist eine negative Krümmung auf, was bedeutet, dass das bogenförmige Profil einer konkaven Funktion folgt. Durch diese negative Krümmung weist die Spanlenkfläche 39 in einem oberen, distalen Bereich 44 des Spanlenkabschnitts 7 direkt an der Zahnspitze 22a, dort wo der Schneidezahn 22 beim Sägen erstmals eingreift, eine spitzere Form beziehungsweise Schneide auf als eine dreieckige Zahnform aus dem Stand der Technik, wodurch unter anderem die Schnittfläche, Maßgenauigkeit und Vorschubleistung verbessert werden. Andererseits ist das bogenförmige Profil der Spanlenkfläche 39 in einem unteren, proximalen Bereich 45 des Schneidezahns 22 deutlich breiter, wodurch eine ausreichende mechanische Stabilität zur Verfügung gestellt wird.

Bei dem in Figur 5 dargestellten Schneidezahn 22 ist der Zahnspitzenbereich 36 beziehungsweise ein Bereich 42, der die Spanfläche 34, also den Spanlenkabschnitt 37 und zumindest teilweise den ersten Räumabschnitt 38, umfasst, stellitiert, also durch Auftragen von Stellit® vergütet. Der Spanlenkabschnitt 37 und der erste Räumabschnitt 38 können durch Stauchen, Flanken- und Profilschleifen geformt und geschärft werden.

Die Schneidezähne 22 können, insbesondere im Bereich 36 der Zahnspitze 22a beziehungsweise der Spanlenkfläche 39 und der Räumfläche 41 eine Beschichtung aus Titan-Nitrid, Hartmetall und/oder Diamant aufweisen.

## Patentansprüche

1. Vorrichtung (1) zum Absägen von mindestens einer Lamelle (2) von einem Substrat (3), insbesondere einem Rundholz, Kantholz, Holzverbundprodukt oder einer Schwarte, aufweisend:
- ein Sägemittel (4), das dazu ausgebildet ist, die Lamelle (2) im Bereich der Unterseite (6) und/oder der Oberseite des Substrats (3) oder von zumindest einer Seitenfläche des Substrats (3)in einem Schnittwinkel (SW) von größer 20° schräg abzusägen;
- ein Transportmittel (12), das dazu ausgebildet ist, das Substrat (3) in Längsrichtung dem Sägemittel (4) entlang einer Transportrichtung (9) zuzuführen;
**dadurch gekennzeichnet, dass** das Sägemittel (4) in der Vorrichtung (1) in einer horizontalen oder vertikalen Schnittebene (5) schräg längs zur Transportrichtung (9) angeordnet ist, wobei das Sägemittel (4) zumindest ein Sägeblatt für eine Kreissäge oder eine Bandsäge (18) mit einer Vielzahl von Schneidezähnen (22) mit einer Spanfläche (34) und einem Zahngrund (35) aufweist, wobei die Schneidezähne (22) vorzugsweise entlang einer Umfangslinie (30) des Sägeblatts ausgebildet sind, wobei zumindest ein Schneidezahn (22) entlang der Spanfläche (34) einen in einem Zahnspitzenbereich (36) des Schneidezahns (22) angeordneten Spanlenkabschnitt (37) aufweist, wobei eine Spanlenkfläche (39) des Spanlenkabschnitts (37) ein bogenförmiges Profil mit einer negativen Krümmung aufweist.

2. Vorrichtung (1) gemäß Anspruch 1, wobei der zumindest eine Schneidezahn (22), der den Spanlenkabschnitt (37) aufweist, einen Räumabschnitt (38), der proximal des Spanlenkabschnitts (37) angeordnet ist, aufweist, und wobei eine Räumfläche (41) des Räumabschnitts (38) ein bogenförmiges Profil mit einer negativen Krümmung aufweist.

3. Vorrichtung (1) gemäß Anspruch 2, wobei alle Schneidezähne (22) einen Spanlenkabschnitt (37) und einen Räumabschnitt (38) aufweisen.

4. Vorrichtung (1) gemäß Anspruch 2 oder 3, wobei zumindest ein Profil, vorzugsweise alle Profile der Spanlenkflächen (39) und der Räumflächen (41) kreisbogenförmig ausgebildet ist/sind.

5. Vorrichtung (1) nach einem der vorhergehenden Ansprüche, **dadurch gekennzeichnet, dass** ein Spanwinkel (SPW) der Spanlenkfläche/n (39) mehr als 28 Winkelgrad, bevorzugt mehr als 33 Winkelgrad, besonders bevorzugt in etwa 38 Winkelgrad, beträgt und/oder wobei ein Freiwinkel (FW) des Schneidezahns/der Schneidezähne (22) 2 bis 12 Winkelgrad, bevorzugt 3 bis 8 Winkelgrad, beträgt.

6. Vorrichtung (1) gemäß Anspruch 4 oder 5, wobei der Durchmesser (DR1) des kreisbogenförmigen Profils der Räumfläche/n (41) größer ist als der Durchmesser (DSL) des kreisbogenförmigen Profils der Spanlenkfläche/n (39).

7. Vorrichtung (1) nach einem der vorhergehenden Ansprüche, **dadurch gekennzeichnet, dass** die Schrägstellung des Sägemittels (4) verstellbar ist, wobei das Sägemittel (4) vorzugsweise um einen Drehpunkt schwenkbar ist, der im Wesentlichen in der Achse des Sägemittels (4) an einer Anschlagseite des Substrats oder im Wesentlichen in der Höhe einer Auflage des Transportmittels (12) liegt.

8. Vorrichtung (1) nach einem der vorhergehenden Ansprüche, **dadurch gekennzeichnet, dass** in der Vorrichtung (1) ein Spaltkeil (10) oder ein Folgeband (27) im Bereich des Schneidespalts (11) dem Sägemittel (4) nachgelagert angeordnet ist, wobei vorzugsweise der Spaltkeil (10) bzw. das Folgeband (27) schräg längs zur Transportrichtung (9) angeordnet ist, wobei die Vorrichtung (1) im Bereich des Spaltkeils (10) einen Sensor (15) aufweist, der dazu ausgebildet ist, an zumindest einem Messpunkt (16) oder entlang zumindest eines Messbereichs (17) zumindest einen Qualitätsparameter (19) der Lamelle (2) zu ermitteln.

9. Vorrichtung (1) nach Anspruch 8, wobei die Vorrichtung (1) ein Steuermittel (22) aufweist, welches dazu ausgebildet, das Transportmittel (12), insbesondere eine Vorschubgeschwindigkeit des Transportmittels (12) und/oder die Sägegeschwindigkeit des Sägemittels (4), sowie vorzugsweise auch die Schrägstellung des Sägemittels (4) in Abhängigkeit von der Schnitthöhe der Lamelle vom Substrat, in Abhängigkeit des/der vom Sensor (15) ermittelten Qualitätsparameter/s (19) in Echtzeit zu steuern.

10. Vorrichtung (1) gemäß Anspruch 8 oder 9, wobei der zumindest eine Messpunkt (16) oder ein Mittelpunkt oder ein Endpunkt des zumindest einen Messbereichs (17) im Wesentlichen auf einer Mittelquerlinie (20) der der Lamelle (2) zugewandten Oberfläche (21) des Spaltkeils (10) bzw. des Folgebands (27) liegt.

11. Vorrichtung (1) gemäß einem der Ansprüche 8 bis 10, wobei der zumindest eine Messpunkt (16) oder der Mittelpunkt oder ein Endpunkt des zumindest einen Messbereichs (17) einen durchschnittlichen Abstand (MA) von in etwa 0,15 bis 0,5 Meter, vorzugsweise in etwa 0,25 bis 0,45 Meter, insbesondere in etwa 0,35 Meter, zu den Zahnspitzen von Schneidezähnen (22) des Sägemittels (4) aufweist.

12. Vorrichtung (1) gemäß einem der Ansprüche 8 bis 11, wobei der zumindest eine Sensor (15) in den Spaltkeil (10) eingebracht ist und/oder einteilig mit dem Spaltkeil (10) ausgebildet ist.

13. Vorrichtung (1) gemäß einem der Ansprüche 8 bis 12, wobei der Sensor (15) dem Spaltkeil (10) im Bereich des Messpunkts (16) oder des Messbereichs (17) gegenüberliegt und die Lamelle (2) zwischen dem Spaltkeil (10) und dem Sensor (15) wegführbar ist.

14. Vorrichtung (1) gemäß Anspruch 13, wobei der Sensor (15) an einer Rolle (18) angebracht oder einteilig mit einer Rolle (18) ausgebildet ist, wobei die Rolle (18) gegebenenfalls zumindest berührend an der Lamelle (2) anliegt.

15. Vorrichtung (1) gemäß einem der Ansprüche 8 bis 14, wobei der zumindest eine Qualitätsparameter die Stärke (19) der Lamelle (2), die Breite der Lamelle (2), Länge der Lamelle (2), die Oberflächenrauigkeit der Lamelle (2), der Feuchtegehalt der Lamelle (2) und/ oder eine Abweichung eines der vorstehenden Qualitätsparameter ist.

16. Vorrichtung (1) gemäß einem der vorhergehenden Ansprüche, wobei das Sägemittel (4) unter einem Schnittwinkel (SW) bis 60 Winkelgrad, vorzugsweise von 20 bis 50 Winkelgrad, insbesondere von 30 bis 45 Winkelgrad, in das Substrat (3) eingreift.

17. Vorrichtung (1) gemäß einem der vorhergehenden Ansprüche, wobei das Sägemittel (4) eine Bandsäge mit einem umlaufenden Sägeband (8) ist, wobei das Substrat (3) in Längsrichtung durch das umlaufende Sägeband (8) durchführbar ist, welches Sägeband (8) an seinen Schneiden bzw. Zahnspitzen kleiner gleich der Bandstärke, oder gleich stark wie die Bandstärke, oder stärker als die Bandstärke mit einem seitlichen Überstand an einer oder beiden Seiten ausgebildet ist, wobei vorzugsweise die Vorrichtung (1) eine im Wesentlichen horizontale (28) oder vertikale Bandführung für das umlaufende Sägeband (8) aufweist.

18. Vorrichtung (1) gemäß einem der vorhergehenden Ansprüche, **gekennzeichnet durch** zumindest zwei Sägemittel (4) zum gleichzeitigen oder sukzessiven Absägen von mindestens zwei Lamellen (2).

19. Vorrichtung (1) gemäß Anspruch 18, wobei der Spaltkeil (10) als Folgeband (27) oder als verstellbarer Spaltkeil (10) mit reduzierter Stärke ausgebildet ist, wobei eine Stärke (SB) des Folgebands kleiner oder gleich der Schnittfuge (SF) des Sägemittels (4) ist und eine Stärke (SK) des Spaltkeils (10) mit reduzierter Stärke größer als die Schnittfuge (SF) des Sägemittels (4) ist.
